# EUROPEAN PATENT SPECIFICATION

(11) **EP 1 974 689 B1**
(45) Date of publication and mention of the grant of the patent: **22.05.2013**
(21) Application number: 08006469.4
(22) Date of filing: 31.03.2008
(51) Int. Cl.: A61C 13/00

(54) **Production method of zirconia-made implant bridge**
Herstellungsverfahren für eine Implantatbrücke aus Zirkonium
Procédé de production de pont d'implant fabriqué à base de zirconium

(30) Priority: 30.03.2007 JP 2007094617
(43) Date of publication of application: 01.10.2008
(73) Proprietor: GC Corporation, Itabashi-ku Tokyo 174-8585 (JP)
(72) Inventor: Urata, Shuntaro, Tokyo (JP); Sakamoto, Yuki, Tokyo (JP)
(74) Representative: Müller-Boré & Partner Patentanwälte

(56) References cited:
- US-A- 5 342 201
- US-A- 5 453 227
- US-A- 5 565 152
- US-A- 5 788 498
- US-A1- 2004 119 180
- US-A1- 2006 099 552
- US-B1- 6 354 836

## Description

The present invention relates to a production method of an implant bridge by using zirconia, according to claim 1.

A bridge is a general prosthesis in a dental prosthesis, but it is necessary to make an abutment tooth by cutting a healthy adjacent tooth in order to compensate a lost tooth. In recent years, an implant has developed and a dental procedure tends not to cut a healthy tooth as much as possible. And an implant bridge using an abutment tooth implanted into a jawbone losing the teeth has been applied in dental procedure (for example, refer to Unexamined Japanese Patent Publication No. 2002-35013).

When an implant bridge is produced, an implant fixture is implanted into a jawbone, and a frame which becomes a base of a bridge (including a full denture) is produced by, for example, a conventional casting method, after the fixture is fixed to the jaw bone. At this time, an insertion hole for an abutment is designed at the frame so as to correspond to a position of the fixture previously fixed at the jawbone. Then, the implant fixture, e.g., an abutment fixed by a fastening screw, is fitted with the insertion hole for the abutment formed at the frame by the design, and the frame and the abutment are fixed while keeping this state by using resin or cement.

However, since an implant does not have a periodontal membrane, which becomes a shock-absorbing material in order to decrease an impact, between the implant and a bone unlike a natural tooth, an implant bridge is weak against an impact, and thus is required to have higher strength than that of a conventional prosthesis. Further, a tolerance level of the fitting accuracy of an implant bridge is small since the implant bridge does not have a periodontal membrane. That is, slightly low fitting accuracy at the time of producing an implant bridge may cause the deviation between an implant fixture and a jawbone.

In order to improve the fitting accuracy of an implant bridge, the applicant of the present invention developed a frame for fixing a denture for a dental implant capable of designing an insertion hole for an abutment corresponding to the position of an implant fixture (refer to Unexamined Japanese Patent Publication No. 2004-344321). However, since this frame is produced by soldering or welding a lot of parts, the frame has low strength. Thus, an implant bridge may be broken or damaged.

On the other hand, zirconia is used as a material to improve strength and aesthetic property in recent years. Zirconia is an excellent material because it has aesthetic property as a ceramic and can be used for a portion required to have strength, e.g. , a core material of a dental prosthesis. However, zirconia is hardly processed by a conventional operation of a dental technician by a hand work, but mostly processed by a group of a system which is called as a dental CAD/CAM system. The dental CAD/CAM system includes a measuring apparatus specialized for producing a dental prosthesis, a CAD/CAM software, and a CAD/CAM processing apparatus. In order to machine zirconia for a dental prosthesis, a method to process zirconia in the state of a semi-sinteredbodyhaving low strength, which is the state before completely sintering zirconia, is generally used, and this method can shorten a processing time (for example, refer to Unexamined Japanese Patent Publication No. 2006-271435). However, when zirconia is completely sintered, the sintered body is strained by a volume shrinkage thereof, an effect of structural strength, and temperature distribution unevenness during processing, and thus the fitting accuracy decreases. A conventional bridge made of metal, a resin, or a ceramic can be adjusted by a hand work of a dental technician when the fitting accuracy is slightly low. However, there is a problem that a precursor of a zirconia-made implant bridge cannot be adjusted unlike the conventional one.

Other relevant prior art is represented by US 5788498 and US 6354836.

An obj ective of the present invention is to provide a production method of a zirconia-made implant bridge having excellent strength and aesthetic property by using a CAD/CAM system, and this zirconia-made implant bridge has high accuracy.

The present inventors carried out earnest works to solve the above-described problems and, as a result of this, they found out such a method to complete the present invention that a precursor of an implant bridge is produced by milling a semi-sintered body, which can be easily processed, to give it the approximate outer shape using a milling machine before a zirconia-made implant bridge having a large volume change is completely sintered, then the precursor is completely sintered, and a portion required to have high accuracy is milled. Thereby, the above-described problems can be solved.

That is, the present invention relates to a production method of a zirconia-made implant bridge, including the steps of producing a semi-sintered body, producing a precursor of the implant bridge by milling the semi-sintered body, completely sintering the precursor of the implant bridge, and milling to process the completely sintered implant bridge to make a fitting part where a fixture or an abutment is fitted, and/or a through hole for a fastening screw.

By the production method of a zirconia-made implant bridge according to the present invention, an implant bridge having excellent strength and aesthetic property can be produced with high accuracy by using zirconia.

An example of a production method of a zirconia-made implant bridge according to the present invention will be described below.

An implant fixture is implanted in a jawbone of a patient in a first surgical operation. If necessary, an operation to create a bone may be carried out before the first surgical operation in order to obtain the amount of a jawbone required to implant the implant fixture. After the implant fixture is implanted, an enough time is required to make the implant fixture and the jawbone to be sufficiently bonded (osseousintegration). Then, a second surgical operation is carried out to attach a healing abutment to the implant fixture. At this time, the implant penetrates a gingiva so as to be in the state that a head of the healing abutment is exposed in an oral cavity.

After the healing abutment is attached, a time is required to make a periodontium which becomes unstable due to the second surgical operation to be stabilized. Then, the healing abutment is removed, and an abutment is attached. While keeping this state, an impression in an oral cavity needed to produce an implant bridge is taken by using an impression coping and a dental silicone impression material. The impression coping is used in order to accurately take the impression of a position, where a fixture is embedded, and an inclination of the fixture. The implant fixture is not moved because of being bonded to a bone not through a periodontal membrane. Thus, particularly in a case of an implant bridge using a plurality of implant fixtures together, it is necessary to take a very precise impression.

After taking the impression, a jaw model is made with gypsum by using the impression. At this time, an abutment analog is implanted into the jaw model by using an impression coping. This implanted place is the same position and the same angle as those of the abutment attached to the upper part of the fixture. Then, a complete model of an implant bridge is produced on a temporary cylinder, which is fitted to the abutment analog, by using, for example, a resin.

The produced model of the implant bridge is measured by a measuring apparatus to obtain three-dimensional data of the model. In order to obtain high fitting accuracy, it is preferable that measurement data of the position and angle of a fitting part is obtained by measuring the jaw model or directly measuring the inside of an oral cavity. Further, in addition to directly measuring, an implant bridge can be designed by a design software of a CAD/CAM system from measurement data of the jaw model or direct measurement data of the inside of an oral cavity.

The three-dimensional shape data of the measured model is taken into the CAD/CAM system. At this time, if the system previously has detailed shape data of an implant (e.g., shape data of a fitting part with a fixture or an abutment, and a through hole for a fastening screw, which particularly need to be accurately processed in an implant bridge), it is preferable to remove the fluctuation of the shape data due to a measurement error or the like through such a process that the position and angle of the fitting part or the through hole for a fastening screw are read from the three-dimensional shape data of the measured model, and the existing shape data previously registered in the CAD/CAM system are replaced with data obtained by rotating and moving the previously registered data. In addition, the shape data of the fitting part or the through hole for a fastening screw, which is previously registered in the CAD/CAM system, can be changed and applied to various implant systems having different shapes of a fitting part.

Two kinds of processing programs are prepared by adding information, which is required for processing by the CAD/CAM system, to the measurement data. In those processing programs, one is a processing program for producing a precursor, which is to carry out rough processing of a semi-sintered body and processing of parts except for the fitting part and the through hole for a fastening screw. The other is a detail processing program, which is to carry out processing of the fitting part and the through hole for a fastening screw to a sintered body. The processing program for producing a precursor is to carry out processing of portions other than those mill by the detail processing program (e.g. , shape data of the fitting part or the through hole for a fastening screw). The detail processing program is mainly to carry out milling process of the portions which are not produced by the processing program for producing a precursor. However, a program to re-process portions produced by the processing program for producing a precursor may be added to the detail processing program.

In each processing step, milling process is carried out by inputting the processing programs to a processing machine. There are two processing steps to be carried out by the two programs. One is a precursor producing step, which is to carry out rough processing of a semi-sintered body for the whole bridge, and milling process of parts except for the fitting part and the through hole for a fastening screw, which needs particularly precise processing in an implant bridge, by the processing program for producing a precursor. The other is a detail producing step, which is to carry out processing of the fitting part and the through hole for a fastening screw to the completely sintered precursor by the detail processing program.

An implant bridge precursor is produced from a semi-sintered body by using a processing program for producing a precursor. The semi-sintered body has a size capable of producing the whole objective implant bridge and is generally a block sintered at a temperature from 1000 to 1300°C. In the production method according to the present invention, a semi-sintered body is cut to be processed like the convention method. Theprocessingat this time is in the precursor producing step to produce an implant bridge precursor, and is to cut only such portions in an objective implant bridge that have no problems even if they are slightly influenced by shrinking at the time of completely sintering. That is, portions except for the fitting part and the through hole for a fastening screw are milled as those portions are not influenced by fixing accuracy when the implant bridge is fixed in an oral cavity. The reason for it is that, even if those portions except for the fitting part and the through hole for a fastening screw are slightly warped, those portions can be corrected by a hand work of a dental technician or a dentist, and a slight error does not cause a problem from a dental clinical viewpoint.

Position information to carry out processing of the fitting part and the through hole for a fastening screw is inscribed on the semi-sintered body, or a shape having specific shape information is added to the semi-sintered body as a mark within a range of not causing a problem in the production of an implant bridge. If the fitting part or the through hole for a fastening screw is roughly processed in the processing step of the semi-sintered body so as to have a processing margin within a range of not causing a problem in the following processing step of the sintered body, the processing of the fitting part or the through hole for a fastening screw to the sintered body can be shortened.

After finishing the cutting process of the semi-sintered body, completely sintering is carried out. A method of the completely sintering is similar to that of a conventional method, and sintering is generally carried out at 1400 to 1600°C.

In addition, in the production method according to the present invention, a completely sintering work is carried out between the precursor producing step and the detail producing step. Thus, it is not desirable to attach and fix a special jig to a semi-sintered body or a completely sintered body in order to hold the body to a processing machine. It is desirable that the semi-sintered body or the completely sintered body itself is made to have a shape capable of being directly fixed to a processing machine, or is fixed to a processing machine with an easily removable jig.

Then, the completely sintered body is subjected to the detail producing step for the fitting part or the through hole for a fastening screw. That is, a completely sintered precursor is subjected to milling process of the fitting part or the through hole for a fastening screw by using a detail processing program. In order to obtain position information for processing in the detail producing step, a sensor of a processing machine can be used to read a mark of position information added in the previous processing. In the final processing by a processing machine, it is more preferable that a zirconia portion at which an objective zirconia-made implant bridge is fixed is milled, or an objective zirconia-made implant bridge is milled and removed from another portion.

## Claims

1. A production method of a zirconia-made implant bridge, comprising:
a step of producing a semi-sintered body;
a step of producing a precursor of an implant bridge by milling the semi-sintered body except for a fitting part where a fixture or an abutment is fitted, and a through hole for a fastening screw,
a step of completely sintering the milled precursor of the implant bridge; and
a detail producing step of milling the completely sintered implant bridge to make said fitting part and said through hole, wherein a CAD/CAM system is used in the step of producing a precursor and in the detail producing step.

## Patentansprüche

1. Verfahren zur Herstellung einer aus Zirkoniumoxid hergestellten Implantatbrücke, umfassend:
einen Schritt des Erzeugens eines teilgesinterten Körpers,
einen Schritt des Erzeugens einer Vorstufe einer Implantatbrücke durch Fräsen des teilgesinterten Körpers mit Ausnahme eines Befestigungsteils, an dem ein Haltemittel oder ein Stützmittel befestigt wird, und eines Durchgangslochs für eine Befestigungsschraube,
einen Schritt des vollständigen Sinterns der gefrästen Vorstufe der Implantatbrücke und
einen Detailerzeugungsschritt des Fräsens der vollständig gesinterten Implantatbrücke zur Herstellung des Befestigungsteils und des Durchgangslochs, wobei in dem Schritt des Erzeugens einer Vorstufe und in dem Detailerzeugungsschritt ein CAD/CAM-System verwendet wird.

## Revendications

1. Méthode de production d'un bridge implantaire à base de zircone, comprenant :
une étape de production d'un corps semi-fritté ;
une étape de production d'un précurseur d'un bridge implantaire en fraisant le corps semi-fritté à l'exception d'une partie de fixation où une fixation ou une butée est fixée, et un trou perforant pour une vis de fixation,
une étape consistant à fritter complètement le précurseur fraisé du bridge implantaire ; et
une étape de production de détails consistant à usiner le bridge implantaire complètement fritté pour réaliser ladite partie de fixation et ledit trou perforant, dans laquelle un système CAO/FAO est utilisé dans l'étape de production d'un précurseur et dans l'étape de production de détails.
